# EUROPEAN PATENT APPLICATION

(11) **EP 3 351 109 A1**
(43) Date of publication of application: **25.07.2018**
(21) Application number: 17152465.5
(22) Date of filing: 20.01.2017
(51) Int. Cl.: A21D 10/02, A21D 13/26, A21D 13/28

(54) **SUPPORT STRUCTURE FOR RAW DOUGH**

(71) Applicant: Orkla Foods Norge AS, 1411 Kolbotn (NO)
(72) Inventor: SANDØ, Tommy, N-6200 STRANDA (NO); OWE, Inger Eline Kjensmo, N-1538 MOSS (NO); MOLDESTAD, Anette, N-0957 OSLO (NO); JOHANSEN, Monica Bongé, N-0663 OSLO (NO); HELSEM, Lars H., N-6200 STRANDA (NO); KOLRUD, Jannike, N-1361 ØSTERÅS (NO)
(74) Representative: Onsagers AS

(57) **Abstract**

The invention concerns a support structure (1) for transportation of raw dough (2), wherein the support structure (1) comprises at least two layers consisting of:
- a hydrophobic layer (4) comprising a polymer material, and
- an edible upper layer (3) comprising an upper side (3a) and a lower side (3b), wherein the lower side (3b) is attached to the hydrophobic layer (4) and the upper side (3a) is attached to the raw dough (2) during use.

The invention also concerns a method for applying and removing the raw dough (2) from the support structure (1).

## Description

### Technical Field

The present invention relates to a support structure for transportation of raw dough. The raw dough may be pizza dough, dough for baking goods or the like. Further, the present invention relates to a method for applying and removing the raw dough from the inventive support structure.

### Background and prior art

It is a desire to provide costumers with frozen raw dough products of foods supplying the costumers with fresh ingredients in contrast to prebaked products. Different support structures for transporting such raw doughs are known from prior art.

EP 1060669 discloses a support structure for transporting and baking raw doughs which consists of three layers: 1) an upper layer being a separating layer such as baking paper, 2) a middle layer having temperature dependent adhesive properties, and 3) a bottom stabilizing layer such as cardboard.

US 6500475 discloses dough products moulded to a desired shape and frozen on a paperboard packing preform. During the forming process, an edible baking film or substrate is positioned between the dough and the paperboard packing preform. The consumer removes the frozen dough and baking substrate from the preform before baking in the oven. The substrate prevents the dough product from distortion on the oven rack bars. The edible substrate is absorbed into the underside of the dough product during baking. In order for the paperboard packing preform to stick to the edible substrate, oil is sprayed onto the paperboard packing preform. A paperboard packing preform consist of a moister absorbent material.

It is an object of the present invention to provide a support structure that enables the raw dough to be easily removed from the support structure in a manner that leaves the inedible part of the support structure to be easily removed from the raw dough in frozen state before baking the dough.

It is also an object of the present invention to provide a support structure wherein the inedible part can be removed from the dough without the raw dough loosing its shape.

It is also an object of the present invention to provide a support structure that adheres to the raw dough in thawed state and wherein the adhesive strength is strong enough to keep a standard raw dough fixed to the support structure in frozen state.

It is also an object of the present invention to provide a support structure comprising a layer which eliminates, or at least decreases, the possibility of the dough to be absorbed by the support structure.

It is also an object of the present invention to provide a method that is reproducible and easy to operate.

### Summary of the invention

The present invention is set forth and characterized in the independent claims, while the dependent claims describe other characteristics of the invention.

In particular, the invention concerns a support structure suitable for transportation of raw dough. The raw dough may be in a thawed, state, a frozen state or any temperature state in between. The raw dough, such as pizza dough, is in its thawed state placed onto the support structure. To make it possible to remove the dough from the support structure without loosing its shape, the dough and the support structure are brought into frozen state.

The support structure according to the present invention comprises at least two layers consisting of:
- a hydrophobic layer comprising a polymer material, and
- an edible upper layer comprising an upper side and a lower side, wherein the lower side is attached to the hydrophobic layer and the upper side is attached to the raw dough during use.

In an advantageous example embodiment, the upper layer has adhesive properties in forming a stable adherence to the hydrophobic layer and the raw dough.

The term "stable adherence" is used herein to describe that the adherence between the upper layer and the hydrophobic layer, as well as between the upper layer and the raw dough, is sufficiently strong to keep the raw dough, in frozen or thawed state, or any temperature state in between frozen and thawed, adhered or fixed to the support structure during transportation without sliding off the support structure.

In other words, the upper layer has an adhesive strength between the upper layer and the hydrophobic layer and between the upper layer and the raw dough, which is sufficient to keep the raw dough attached to the support structure during transportation in thawed state, frozen state and any temperature state in between the two states.

It is an important feature of the present invention that the support structure comprises a hydrophobic layer such that moisture from the dough is not absorbed into the support structure, and further to prevent or minimize any bonding between the raw dough and hydrophobic layer, thereby ensuring that there are no or insignificant residuals from the dough on the hydrophobic layer after removal of the dough therefrom.

To assure easy removal of the raw dough from the support structure in frozen state, the adhesive strength between the upper layer and the hydrophobic layer is preferably weaker or equal to the adhesive strength between the upper layer and the raw dough.

When removing the raw dough from the support structure, at least a part of the edible upper layer of the support structure often remains attached to the dough, while the rest remains onto the hydrophobic layer. Thus, in addition to the property attaching the raw dough to the upper layer it is important that the upper layer is edible. The edible upper layer can be selected from any one of edible oils such as olive oil, coconut oil, rasp oil, sunflower oil and the like, butter, margarine, mixtures of flour and water and any combination thereof. In an advantageous example embodiment according to the present invention, the upper layer comprises a homogeneous mixture of flour and water.

In another advantageous example embodiment, the upper layer comprises a mixture of at least 50 weight% water, preferably at least 60 weight% water, and even more preferably at least 70 weight% water.

In another advantageous example embodiment, the upper layer comprises flour selected from at least one of wheat flour, potato flour, barley flour, rye flour, spelt flour, rice flour and corn flour.

In another advantageous example embodiment, the hydrophobic layer comprises at least one of polypropylene, polybutylene terephthalate, polyethylene or silicone. Most preferably, the hydrophobic layer comprises polybutylene terephthalate (PET).

In another advantageous example embodiment, the hydrophobic layer comprises foamed PET.

In another advantageous embodiment, the hydrophobic layer is recyclable.

In one example embodiment according to the present invention, the support structure consists of the hydrophobic layer and the edible upper layer, wherein the hydrophobic layer functions as a stabilizing layer and should thus be sufficiently stiff or rigid to stabilize and support the dough during transportation. When the hydrophobic layer is functioning as a stabilizing layer, the hydrophobic layer is having a thickness of at least 0.2 mm, preferably at least 0.7 mm, and even more preferably at least 1.0 mm, for example 1.1 mm.

In another example embodiment, the hydrophobic layer is on its underside attached to a cardboard layer functioning as the stabilizing layer. In this embodiment the hydrophobic layer can be a film which is attached to the cardboard layer. The hydrophobic layer comprises a upper side and a lower side, wherein the upper side is attached to the lower side of the edible upper layer and the lower side is attached to the cardboard layer, and wherein the cardboard layer is functioning as a stabilizing layer sufficiently stiff or rigid to support and stabilize the raw dough during transportation.

In an advantageous example embodiment the cardboard layer is attached to the hydrophobic layer by an edible glue, such as for example a mixture of flour and water, edible oil, butter or the like.

In a preferred embodiment, the edible glue is a mixture of flour and water, wherein the flour can be selected from at least one of wheat flour, potato flour, barley flour, rye flour, spelt flour, rice flour and corn flour.

In another advantageous example embodiment the cardboard layer is functioning as a stabilizing layer for the support of the raw dough, wherein the hydrophobic layer is a film with a thickness of at least 300 µm, preferably at least 350 µm, for example 400 µm.

The present invention also concerns a method for applying and removing a raw dough from the support structure comprising the consecutive steps of:
a) placing the raw dough in thawed state onto the edible upper layer of the support such that the raw dough is adhered to the edible upper layer,
b) freezing the support structure with the raw dough, and
c) removing the raw dough by tearing it off the support structure while being in a frozen state.

In an advantageous example embodiment, the strength of the adherence between the upper side of the upper layer and the raw dough is such that at least a part of the upper layer remains on the raw dough after removal in frozen state, for example more than 60 % of the upper layer. Experiments have shown that up to 99 % of the edible upper layer of the support structure can remain on the raw dough after removal.

The support structure according to the invention may be of any geometrical shape like for example round, oval, triangular, rectangular or polygonal.

The term "stabilizing layer" is used herein to describe the layer being sufficiently stiff or rigid to support the dough during transportation. However, the stabilizing layer can be bendable to a certain degree For example, the stabilizing layer can be bendable up to 10 degrees when only subjected to the pressure of a standard raw dough covering at least 90 % of upper side of the support structure, , but is still rigid enough to sustain the standard raw dough during transportation.

The term "raw" is used herein to describe the state wherein the dough is workable and soft when being in a thawed state. The dough is also considered to be raw prior to baking the dough in the oven.

The term "dough" is used herein to describe any kind of flour-based dough, which can be used to make pizzas, pies, bread, pastries and the like. The dough may further comprise a topping.

The term "thawed state" is used herein to describe a thermal state of the dough wherein the dough comprises sticky properties. This state occurs at temperatures above 0 °C.

The term "frozen state" is used herein to describe a thermal state of the dough wherein the dough is hard and rigid because most of the water in the dough has frozen into ice, for example more than 90 % of the water, preferably 100 %. The state occurs at temperatures below 0 °C.

The term "cardboard layer" is used herein in its broadest term to describe a layer comprising stiff paper such as pasteboard, cardboard, carton, paper board and the like. Further, the cardboard layer may also be corrugated and/or comprise perforations.

In the following description, numerous specific details are introduced to provide a thorough understanding of embodiments of the claimed support structure and method. One skilled in the relevant art, however, will recognize that these embodiments can be practiced without one or more of the specific details, or with other components. In other instances, operations are not shown, or are not described in detail, to avoid obscuring aspects of the disclosed embodiments.

### Brief description of the drawings

Fig. 1 is a perspective view of an example embodiment of a support structure according to the present invention.
Fig. 2 is a perspective view of a further example embodiment of a support structure according to the present invention.

### Detailed description of the invention

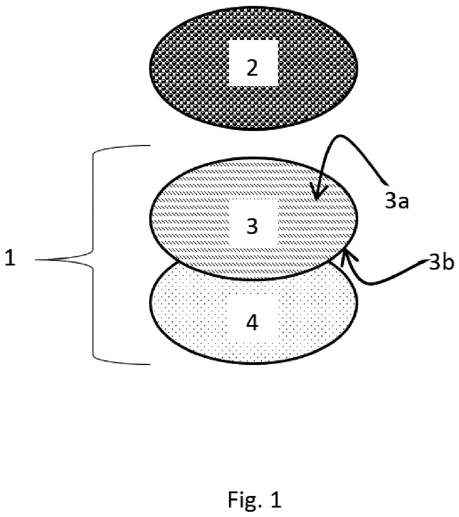

An example embodiment of a support structure 1 according to the present invention is shown in fig. 1. The support structure 1 has a hydrophobic layer 4 and an edible upper layer 3. The upper layer 3 has a upper side 3a and a lower side 3b, where the lower side 3b is attached to the hydrophobic layer 4, and the upper side 3a is attached to the raw dough 2 during use.

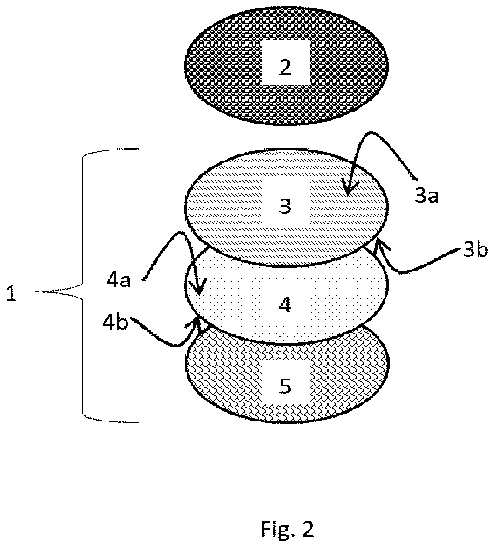

Another example embodiment of a support structure 1 according to the present invention is shown in fig. 2. The support structure 1 comprises a cardboard layer 5 which on it upper side is covered with a film of a hydrophobic layer 4. The lower side 4b of the film can be attached to the cardboard layer 5 by edible glue. An edible upper layer 3 is attached to the upper side 4b of the layer 4. Thus, the lower side 3b of the upper 3 layer is attached to the upper side 4a of the hydrophobic layer 4. The raw dough 2 is, as illustrated in figure 1, attached to the upper side 3a of the upper layer 3.

### Example 1:

The support structure 1 in the present example is schematically illustrated in figure 1. The support structure 1 comprises a hydrophobic layer 4 of PET having a shape of a round circle with a diameter of 30 cm and a thickness of 1.1 mm. An edible upper layer 3 comprising a homogeneous mixture of edible adhesive material is rolled on to the stabilizing non-water absorbent hydrophobic layer 4, creating a film thereon. The edible adhesive material may be manufactured using one part wheat flour to 30 parts of water, which are stirred together at 20 °C until homogeneously suspended.

A portion of standard raw dough 2 having a weight of about 350 grams is placed onto the edible upper layer 3 of the support structure 1 covering at least 95% of the support structure 1. In this embodiment, the hydrophobic layer 4 works as a stabilizing layer with a sufficient stiffness to keep the standard raw dough 2 stable during transportation.

At temperatures above 0 °C the raw dough 2 is adhered to the support structure 1. Due to the sticky properties of the edible upper layer 3 the support structure 1 may be turned upside down while maintaining the adherence to the raw dough 2. The adhesive strength renders it close to impossible to remove the raw dough 2 from the support structure 1 without destroying the shape of the raw dough 2. When freezing the support structure 1 comprising the raw dough 2 to about -18 °C, the adhesive strength is still strong enough to keep the raw dough 2 fixed to the support structure 1, even when the support structure 1 is moved upside down. However, the sticky property of the upper layer 3 is lost in the frozen state and thus allows the raw dough 2 to be torn off the support structure 1 without loosing the shape of the raw dough 2.

Preferably, the support structure 1 is at least slightly bendable to ease the process of tearing the raw dough off the support structure 1. After tearing the raw dough 2 off the support structure 1, at least a part of the upper layer 3 is left on the raw dough 2.

If the raw dough 2 is not removed from the support structure 1 in its frozen state, and is allowed to thaw to a temperature at or above 0 °C, the upper layer 3 of the support structure 1 will regain its sticky property, and the raw dough 2 will again be close to impossible to remove from the support structure 1 without loosing the shape of the raw dough 2 due to adhesive strength mentioned above. Thus, the support structure 1 comprising the raw dough 2 must be refrozen in order to be able to remove the raw dough 2 from the support structure 1 without the raw dough 2 loosing its shape.

### Example 2:

The support structure 1 in the present example is shown in figure 2. The support structure 1 comprises a cardboard layer 5 as stabilizing layer having a shape of a round circle with a diameter of 30 cm and a thickness of 2 mm. A 400 µm thick film of a hydrophobic layer 4 consisting of PET is attached to the upper side of the cardboard layer 5 by using an edible glue (not shown). An edible upper layer 3 comprising a homogeneous mixture of edible adhesive material is rolled on to the upper side 4a of the hydrophobic layer 4, creating a film thereon. The edible adhesive material may be manufactured using one part wheat flour to 30 parts of water which are stirred together at 20 °C until homogeneously suspended.

A portion of standard raw dough 2 having a weight of about 350 grams is placed onto the upper side 3a of the edible upper layer 3 covering at least 95% of the upper surface of the support structure 1. At temperatures above 0 °C the raw dough 2 is adhered to the support structure 1. Due to the sticky property of the edible upper layer 3 the support structure 1 may be turned upside down while maintaining the adherence to the raw dough 2,. The adhesive strength renders it close to impossible to remove the raw dough 2 from the support structure 1 without destroying the shape of the raw dough 2.

When freezing the support structure 1 comprising the raw dough 2 to about -18 °C the adhesive strength is still strong enough to keep the raw dough 2 fixed to the support structure 1, even when the support structure 1 is turned upside down. However, the sticky property of the upper layer 3 is lost in the frozen state, thus allowing the raw dough 2 to be torn off the support structure 1 without loosing the shape of the raw dough 2. Due to a stronger adhesion between the raw dough 2 and the upper layer 3 compared to the upper layer 3 and the stabilizing non-absorbent layer 4, at least a part of the upper layer 3 remains on the raw dough 2 after removal.

If the raw dough 2 is not removed from the support structure 1 in its frozen state, and is allowed to thaw to a temperature at or above 0 °C, the upper layer 3 of the support structure 1 will regain its sticky property, and the raw dough 2 will again be close to impossible to remove without loosing the shape of the raw dough 2 due to the adhesive strength as indicated above. Thus, the support structure 1 comprising the raw dough 2 must be refrozen in order to be able to remove the raw dough 2 from the support structure 1 without the raw dough 2 loosing its shape.

Preferably, the support structure 1 is at least slightly bendable to ease the process of tearing the raw dough 2 off the support structure 1. Further, the stabilizing layer of the support structure 1 may comprise an extruding flange extruding from the circumference of the stabilizing layer, thus making the support structure 1 easy to grab and hold when tearing the support structure 1 off the raw dough 2.

The term "standard raw dough" used herein is having a weight of about 350 grams and comprises about 170 grams wheat flour, about 25 grams yeast, 30 grams rasp oil, about 2 grams salt and about 120 grams of water. The standard dough is shaped into an about 0.5 cm thick rounded form.

A topping may be added onto the raw dough 2 after the raw dough 2 has been placed onto the support structure 1 in thawed state. If the raw dough is a pizza dough, topping such as tomato sauce, cheese and/or ham can be added onto the raw dough 2.

The hydrophobic layer 4 of the present invention should be removed from the raw dough before baking. Materials such as PET may decompose at temperatures above around 200 °C. The material may thus not be suited for baking.

In the preceding description, various aspects of the support structure according to the invention have been described with reference to the illustrative embodiments. However, this description is not intended to be construed in a limiting sense. Various modifications and variations of the illustrative embodiments, as well as other embodiments of the support structure, which are apparent to persons skilled in the art to which the disclosed subject matter pertains, are deemed to lie within the scope of the present invention.

### List of reference numerals / letters:

- 1: support structure
- 2: raw dough
- 3: edible upper layer, upper layer
- 3a: upper side of edible upper layer
- 3b: lower side of edible upper layer
- 4: hydrophobic layer
- 4a: upper side of hydrophobic layer
- 4b: lower side of hydrophobic layer
- 5: cardboard layer

## Claims

1. A support structure (1) for transportation of raw dough (2),
**characterized in that** the support structure (1) comprises at least two layers consisting of:
- a hydrophobic layer (4) comprising a polymer material, and
- an edible upper layer (3) comprising an upper side (3a) and a lower side (3b), wherein the lower side (3b) is attached to the hydrophobic layer (4) and the upper side (3a) is attached to the raw dough (2) during use.

2. The support structure (1) in accordance with claim 1, **characterized in that** the upper layer (3) has adhesive properties forming a stable adherence to the hydrophobic layer (4) and the raw dough (2).

3. The support structure (1) in accordance with claim 1 or 2, **characterized in that** the adhesive strength between the upper layer (3) and the hydrophobic layer (4) is weaker or equal to the adhesive strength between the upper layer (3) and the raw dough (2).

4. The support structure (1) in accordance with any one of the preceding claims, **characterized in that** the upper layer (3) comprises a homogeneous mixture of flour and water.

5. The support structure (1) in accordance with claim 4, **characterized in that** the upper layer (3) comprises at least 50 wt% water at 20 °C.

6. The support structure (1) in accordance with claims 4 or 5, **characterized in that** the upper layer (3) comprises flour selected from at least one of wheat flour, potato flour, barley flour, rye flour, spelt flour, rice flour and corn flour.

7. The support structure (1) in accordance with any one of the preceding claims, **characterized in that** the hydrophobic layer (4) comprises polyethylene terephthalate.

8. The support structure (1) in accordance with any one of the preceding claims, **characterized in that** the hydrophobic layer (4) comprises foamed polyethylene terephthalate.

9. The support structure (1) in accordance with any one of the preceding claims, **characterized in that** the hydrophobic layer (4) is a stabilizing layer having a thickness of at least 0.2 mm, preferably at least 0.7 mm, and even more preferably at least 1.0 mm.

10. The support structure (1) in accordance with any one of claims 1-8, **characterized in that** the hydrophobic layer (4) comprises a upper side (4a) and a lower side (4b), wherein the upper side (4a) is attached to the lower side (3b) of the upper layer (3) and the lower side (4b) is attached to a cardboard layer (5), and wherein the cardboard layer (5) is a stabilizing layer sufficiently stiff to support the raw dough (2) during transportation.

11. The support structure (1) in accordance with claim 10, **characterized in that** the cardboard layer (5) is attached to the hydrophobic layer (4) by a water-based glue.

12. The support structure (1) in accordance with claim 10 or 11, **characterized in that** the hydrophobic layer (4) is a film with a thickness of at least 300 µm.

13. A method for applying and removing a raw dough (2) from a support structure (1),
**characterized by** comprising the following consecutive steps:
a) placing the raw dough (2) in a thawed state onto an upper layer (3) of a support structure (1) according to any one of the claims 1-12, thereby adhering the raw dough (2) to the upper layer (3),
b) freezing the support structure (1) with the raw dough (2), and
c) removing the raw dough (2) by tearing it off the support structure (1) while the raw dough (2) and the support structure (1) are in their frozen state.

14. The method according to claim 13 **characterized in that** the strength of the adherence between the upper side of the upper layer (3) and the raw dough (2) is such that at least a part of the upper layer (3) remains on the raw dough (2) after removal in frozen state.

15. The method according to claim 14 **characterized in that** the strength of the adherence between the upper side of the upper layer (3) and the raw dough (2) is such that at least 60% of the upper layer (3) remains on the raw dough (2) after removal in frozen state.
